# EUROPÄISCHE PATENTSCHRIFT

(11) **EP 3 467 544 B1**
(45) Veröffentlichungstag und Bekanntmachung des Hinweises auf die Patenterteilung: **08.12.2021**
(21) Anmeldenummer: 18197871.9
(22) Anmeldetag: 01.10.2018
(51) Int. Cl.: G01S 17/58, B25J 19/06, G01S 17/894

(54) **VERFAHREN FÜR EINEN MONTAGEARBEITSPLATZ, MONTAGEARBEITSPLATZ, VORRICHTUNG ZUM AUSFÜHREN DES VERFAHRENS, COMPUTERPROGRAMM UND COMPUTERLESBARES MEDIUM**
METHOD FOR AN ASSEMBLY WORKSTATION, ASSEMBLY WORKSTATION, DEVICE FOR CARRYING OUT SAID METHOD, COMPUTER PROGRAM AND COMPUTER READABLE MEDIUM
PROCÉDÉ POUR UN POSTE DE TRAVAIL DE MONTAGE, POSTE DE TRAVAIL DE MONTAGE, DISPOSITIF DE MISE EN UVRE DU PROCÉDÉ, PROGRAMME INFORMATIQUE ET SUPPORT LISIBLE PAR ORDINATEUR

(30) Priorität: 06.10.2017 DE 102017217822
(43) Veröffentlichungstag der Anmeldung: 10.04.2019
(73) Patentinhaber: Robert Bosch GmbH, 70442 Stuttgart (DE)
(72) Erfinder: Nowak, Rene, 70469 Stuttgart (DE)

(56) Entgegenhaltungen:
- EP-A2- 2 380 709
- DE-A1-102010 002 250
- DE-A1-102016 202 581

## Beschreibung

### Gebiet der Erfindung

Die Erfindung betrifft ein Verfahren zur Handverfolgung bei einem manuellen Montagearbeitsplatz. Des Weiteren betrifft die Erfindung einen Montagearbeitsplatz mit einer Arbeitsfläche und einer Tiefenkamera. Außerdem ist eine Vorrichtung vorgesehen, mit der das Verfahren ausführbar ist. Außerdem sollen für die Erfindung ein Computerprogramm und ein computerlesbares Medium vorgesehen sein.

### Hintergrund der Erfindung

Aus der DE 10 2013 220 107 A1 ist ein Montagearbeitsplatz bekannt. Dieser weist mehrere Behälteraufnahmevorrichtungen auf, welche zur Aufnahme von jeweils zumindest einem zugeordneten Materialbehälter ausgebildet sind. Des Weiteren ist eine Positionsbestimmungsvorrichtung vorgesehen, mit welcher die Position einer Hand einer Montageperson oder Werkers oder eine mit der Hand verbindbare Markierung ermittelbar ist. Die Positionsbestimmungsvorrichtung kann hierbei mit einer Steuervorrichtung verbunden sein.

Die gattungsbildende DE 10 2010 002 250 A1 offenbart ein Überwachungssystem mit mindestens einer 3D-TOF-Kamera zur Überwachung eines, insbesondere sicherheitskritischen, Bereichs, mit einer Auswerteeinheit, die bei einem Eindringen eines Objekts bzw. einer Person in den überwachten Bereich eine Sicherheitsfunktion aktiviert, wobei die Auswerteeinheit derart ausgestaltet ist, dass die Aktivierung der Sicherheitsfunktion unterbleibt, wenn an dem eindringenden Objekt bzw. der Person mindestens ein optisches Freigabeelement erkannt wird. Dabei ist der zu überwachende Bereich teilweise oder vollständig mit Markierungselementen mit mindestens einer definierten optischen Eigenschaft gekennzeichnet, wobei es auch möglich sein soll, ausgehend von den Markierungselementen einen größeren oder kleineren Überwachungsbereich festzulegen.

Die DE 10 2013 202 581 A1 offenbart ein Verfahren zur Montagevorgangskontrolle, wobei ein räumlicher Bewegungsablauf einer Hand mit einem gespeicherten Soll-Bewegungsablauf verglichen wird.

### Offenbarung der Erfindung

Demgegenüber liegt der Erfindung die Aufgabe zugrunde, ein Verfahren zu schaffen mit dem eine Hand-Verfolgung bei einem Montagearbeitsplatz eine hohe Zuverlässigkeit aufweist. Des Weiteren soll ein Montagearbeitsplatz, eine Vorrichtung, ein Computerprogramm und ein computerlesbares Medium geschaffen werden, die zu einer hohen Zuverlässigkeit einer Hand-Verfolgung bei dem Montagearbeitsplatz führen.

Die Aufgabe hinsichtlich des Verfahrens wird gelöst gemäß den Merkmalen des Patentanspruchs 1, hinsichtlich des Montagearbeitsplatzes gemäß den Merkmalen des Patentanspruchs 12, hinsichtlich der Vorrichtung gemäß den Merkmalen des Patentanspruchs 13, hinsichtlich des Computerprogramms gemäß den Merkmalen des Patentanspruchs 14 und hinsichtlich des computerlesbaren Mediums gemäß den Merkmalen des Patentanspruchs 15.

Vorteilhafte Weiterbildungen der Erfindung sind Gegenstand der Unteransprüche.

Erfindungsgemäß ist ein Verfahren zur Hand-Verfolgung oder zum Hand-Tracking bei einem manuellen Montagearbeitsplatz vorgesehen. Dieser hat beispielsweise eine Arbeitsfläche und eine Tiefenkamera, wobei die Tiefenkamera mit einer Steuereinheit verbunden sein kann. Die Steuereinheit kann dann über die Tiefenkamera in einem Erfassungsbereich Ist-Tiefenbilder aufnehmen. Vorzugsweise ist die Arbeitsfläche zumindest teilweise oder im Wesentlichen vollständig oder vollständig im Erfassungsbereich vorgesehen. Die Steuereinheit kann des Weiteren über die Tiefenkamera ein Bezugs-Tiefenbild des Erfassungsbereichs aufnehmen. Beim Bezugstiefenbild ist der Erfassungsbereich vorzugsweise fremdkörperfrei, womit beispielsweise auch keine Arme oder sonstige Körperteile einer Bedienperson vorgesehen sind. Des Weiteren kann die Steuereinheit zumindest eine Bezugslinie im Erfassungsbereich vorsehen. Weiter vorzugsweise kann eine in den Erfassungsbereich eingebrachte Struktur, beispielsweise im Betrieb des Montagearbeitsplatzes, von der Steuereinheit erkannt werden. Hierbei kann sie die Ist-Tiefenbildern dem Bezugs-Tiefenbild gegenüberstellen. Die Steuereinheit kann dann die Struktur als zumindest einen Arm zumindest einer Montageperson wahrnehmen, wenn eines oder mehrerer folgender Kriterien erfüllt sind:
- die Struktur weist eine Verbindung zur Bezugslinie auf, beispielsweise in einem erfassten Ist-Tiefenbild der Tiefenkamera gesehen, und zwar indem die Struktur die Bezugslinie berührt, schneidet oder überdeckt,
- und/oder die Struktur weist eine vorbestimmte Mindestfläche, beispielsweise im Ist-Tiefenbild der Tiefenkamera gesehen, auf.

Es hat sich gezeigt, dass mit einem derartigen Verfahren eine äußerst zuverlässige Hand-Verfolgung bei einem manuellen Montagearbeitsplatz ermöglicht ist. Durch die Bezugslinie ist eine äußerst einfache Auswertung ermöglicht.

Die Tiefenbildkamera weist vorzugsweise einen oder mehrere Tiefenbildsensor/en oder 3D-Sensor/en auf. Bei den Tiefenbildern handelt es sich vorzugsweise um 3D-Tiefenbilder, die x-, y- und z-Koordinaten aufweisen oder 3D-Informationen in x-, y- und z-Richtung haben. Der Sensor oder die Sensoren können aus folgenden Sensoren ausgewählt oder jeweils ausgewählt sein: Infrarotsensor, Ultraschallsensor, Lasersensor, insbesondere augensicherer Lasersensor, Radarsensor, Time-of-Flight-Sensor. Mit anderen Worten kann ein Kameraalgorithmus vorgesehen sein, der den Tiefenbildsensor der 3D-Kamera nutzt, wobei es sich um echte 3D-Informationen (x, y, z) handeln kann.

Mit anderen Worten kann eine Software vorgesehen sein, die einen Referenzdatensatz aufzeichnet. Dieser kann Tiefeninformationen des, beispielsweise bestückten, Arbeitsplatzes beinhalten. Sobald Fremdkörper in den Arbeitsbereich hineinfassen oder eingreifen, werden diese durch einen Vergleich mit Referenzinformationen oder dem Referenzdatensatz extrahiert. Bedingungen für die Deutung als einen Arm oder eine Hand sind:
- der Fremdkörper hat eine Verbindung zu einer Bezugslinie
- und/oder der Fremdkörper hat eine Mindestfläche, die beispielsweise frei einstellbar ist.

In weiterer Ausgestaltung der Erfindung kann der Punkt oder der Bereich des Arms, der am weitesten von der Bezugslinie in Richtung senkrecht zur Bezugslinie, beispielsweise in einer Bildebene des von der Tiefenkamera aufgezeichneten Tiefenbilds, beabstandet ist, als Bezugspunkt für die Hand-Verfolgung oder als Bezugspunkt der Hand vorgesehen sein. Somit kann auf einfache Weise ein Bezugspunkt festgelegt und verfolgt werden. Mit anderen Worten wird vom erkannten Handumriss als Hand-Tracking-Referenzpunkt der am weitesten vorne oder von der Bezugslinie entfernt befindliche Punkt ermittelt und kann im Anschluss markiert werden. Anhand dieses Punktes kann dann die Hand-Verfolgung und somit beispielsweise eine Behälter-Eingriff-Überprüfung und/oder eine Montageüberprüfung ermöglicht sein.

Vorzugsweise ist als Bezugslinie einfach eine Bildkante des von der Tiefenkamera erfassten Ist-Tiefenbilds oder Bilds vorgesehen. Alternativ oder zusätzlich kann vorgesehen sein die Bezugslinie über die Steuereinheit vorzugeben, womit diese dann vorteilhafterweise einstellbar ist, beispielsweise hinsichtlich ihrer Anordnung bezüglich dem Bild oder Tiefenbild oder Ist-Tiefenbilds. Somit kann die Bezugslinie beispielsweise an eine Arbeitsfläche angepasst werden ohne den Erfassungsbereich der Tiefenkamera zu ändern. Beispielsweise kann die Arbeitsfläche eine Vorderkante aufweisen, von der sich dann die zumindest eine Montageperson des Montagearbeitsplatzes bei der Montage aufhält. Die Bezugslinie kann sich dann vorzugsweise, beispielsweise etwa, im Parallelabstand zur Vorderkante erstrecken. Bei der Bezugslinie handelt es sich vorzugsweise um eine Gerade, wobei je nach Gestaltung der Arbeitsfläche, insbesondere der Vorderkante, auch ein gekrümmter Verlauf denkbar ist. Es hat sich gezeigt, dass eine derartig ausgebildete Bezugslinie ausreichend ist, um Arm- bzw. Handbewegungen zu verfolgen. In weiterer Ausgestaltung der Erfindung kann vorgesehen sein, dass die Bezugslinie einen vorbestimmten Abstand, beispielsweise quer, zur Vorderkante hat. Der Abstand kann hier beispielsweise im erfassten Bild der Tiefenkamera gemessen werden. In der Einstellung des Abstandes kann somit auf einfache Weise der Bereich eingestellt werden, bei dem eine Hand-Verfolgung vorgesehen ist. Vorzugsweise wird nur diejenige Struktur erfasst, die sich von der Bezugslinie aus nach innen oder ins Bildinnere erstreckt. In weiterer Ausgestaltung der Erfindung kann die Bezugslinie eine vorbestimmte Länge haben, die beispielsweise verstellbar ist. Mit Einstellung der Länge kann somit auf einfache Weise ein zu überwachender Bereich eingestellt werden. Daher ist denkbar, dass die Bezugslinie die Vorderkante in zumindest eine oder beide Längsrichtungen der Vorderkante gesehen überstreckt. Hierdurch kann auch ein Arm erfasst werden, der seitlich der Vorderkante auf die Arbeitsfläche eingreift. Vorzugsweise ist die Bezugslinie benachbart oder in der Nähe der Vorderkante vorgesehen. Es ist denkbar, dass die Bezugslinie innerhalb oder außerhalb der Arbeitsfläche liegt. Mit anderen Worten definiert die Vorderkante der Arbeitsfläche eine Bezugslinie, die beispielsweise parallel zur Vorderkante und/oder einen definierten Abstand zur Vorderkante haben kann. Des Weiteren kann die Bezugslinie eine definierte Längenrelation zur Vorderkante aufweisen.

Denkbar ist, dass die Größe und/oder Form der Bezugslinie einstellbar ist.

Mit anderen Worten kann eine vordere Tischkante des Montagearbeitsplatzes oder ein unterer Bildbereich als Bezugslinie dienen oder es kann eine Bezugslinie eingeführt werden.

In weiterer Ausgestaltung der Erfindung ist denkbar, dass die Bezugslinie Teil eines Bezugsrahmens ist, der zumindest einen Teil der Arbeitsfläche umgreift. Der Bezugsrahmen oder die Bezugslinie können einen Referenzbereich definieren, der dann beliebig einstellbar ist. Somit kann der für den Algorithmus zu betrachtende Bereich vergrößert und verkleinert werden. Der Bereich ist frei konfigurierbar. Hiermit kann bei kleineren Arbeitsplätzen ein Fehlverhalten durch Bewegungen neben dem eigentlichen Arbeitsbereich vermieden werden.

Bei der bevorzugten Ausführungsform der Erfindung kann die Steuereinheit die Struktur als zumindest einen Arm zumindest einer Montageperson erfassen, wenn die Struktur die Verbindung zur Bezugslinie hat und wenn zusätzlich die Bezugslinie auf beiden Seiten der Struktur oder zumindest auf einer Seite der Struktur ersichtlich ist, insbesondere im erfassten Bild. Ist dies der Fall, dann kann eine Hand-Verfolgung, beispielsweise mit dem genannten Bezugspunkt, vorgesehen werden. Somit kann von der Struktur zumindest ein Arm erkannt werden, wenn er die Bezugslinie schneidet oder überdeckt. Mit anderen Worten wird eine Hand dann erkannt, wenn ein Arm der Montageperson so über der Bezugslinie angeordnet ist, dass zu beiden Seiten des Armes oder zu einer Seite des Arms ein Stück Bezugslinie vorhanden ist. Beispielsweise kann vorgesehen sein, dass der Arm oder die Hand über Eck zwischen Bezugslinie und der anschließenden Linie noch erkannt wird. Auf diese Weise ist eine klare und definierte Armerkennung geschaffen.

In weiterer Ausgestaltung der Erfindung kann die Steuereinheit einen Abstand der Struktur von der Arbeitsfläche erfassen. Mit anderen Worten kann das Bezugs-Tiefenbild oder können die Ist-Tiefenbilder oder der Referenzdatensatz zusätzlich Tiefeninformationen aufweisen. Hierdurch kann eine Hand-Verfolgung weiter verbessert werden. Es ist denkbar, dass die Steuereinheit die Struktur als zumindest einen Arm zumindest einer Montageperson erfasst, wenn zusätzlich oder alternativ zu den oben stehend genannten Kriterien die Struktur einen vorbestimmten Abstand oder Mindestabstand zur Arbeitsfläche hat. Somit kann im laufenden Betrieb jede zusammenhängende Struktur, die um eine vorgegebene Höhe über dem Bezugstiefenbild liegt als potentieller Arm der Montageperson betrachtet werden, insbesondere falls ein weiteres Kriterium oder mehrere der weiteren Kriterien erfüllt sind. Die Steuereinheit kann beispielsweise anhand der Grautöne der Tiefenbilder einen Abstand zur Arbeitsfläche ermitteln. Der Abstand wird beispielsweise senkrecht zur Arbeitsfläche oder in Vertikalrichtung oder in Richtung senkrecht zum Tiefenbild gemessen. Mit anderen Worten können Grautöne des Tiefenbilds den Abstand der darauf abgebildeten Gegenstände oder Strukturen zur Tiefenkamera angeben. Beispielsweise je dunkler die Töne sind, desto näher ist der damit gekennzeichnete Gegenstand oder die damit gekennzeichnete Struktur an der Tiefenkamera.

Bei einer bevorzugten Ausführungsform der Erfindung kann auch vorgesehen sein, dass die Steuereinheit die Struktur als zumindest einen Arm zumindest einer Montageperson erfasst, wenn zusätzlich oder alternativ zu den oben stehend genannten Kriterien die Struktur unterhalb eines vorbestimmten maximalen Abstands über der Arbeitsfläche liegt. Überschreitet die Struktur somit eine bestimmte Höhe, so kann vorgesehen sein, dass die Struktur nicht mehr als Arm erkannt wird.

In weiterer Ausgestaltung der Erfindung kann der Erfassungsbereich der Tiefenkamera beispielsweise bezüglich seiner Form und/oder bezüglich seiner Größe einstellbar sein, um beispielsweise hierdurch eine zu verarbeitende Datenmenge einzustellen.

Des Weiteren ist denkbar, dass die Bezugslinie oder der Bezugsrahmen bezüglich der Form, insbesondere im Tiefenbild gesehen, und/oder bezüglich seiner Größe eingestellt wird/werden.

Vorzugsweise wird ein zusätzlicher Bereich um eine oder mehrere Seiten der Arbeitsfläche herum vom Erfassungsbereich der Tiefenkamera erfasst.

Die Tiefenkamera ist vorzugsweise oberhalb der Arbeitsfläche angeordnet, beispielsweise in vertikaler Richtung gesehen. Beispielsweise ist die Tiefenkamera mittig über der Arbeitsfläche angeordnet.

Erfindungsgemäß ist ein Montagearbeitsplatz mit einer Arbeitsfläche, einer Tiefenkamera, die oberhalb der Arbeitsfläche angeordnet ist, und einer Steuereinheit vorgesehen. Vorteilhafterweise wird das Verfahren gemäß einem oder mehrerer der vorhergehenden Aspekte eingesetzt.

Erfindungsgemäß ist eine Vorrichtung mit einer Tiefenkamera und einer Steuereinheit vorgesehen, wobei die Vorrichtung eingerichtet ist, das Verfahren gemäß einem oder mehrerer der vorhergehenden Aspekte auszuführen. Eine derartige Vorrichtung kann beispielsweise als Modul bei einem Montagearbeitsplatz eingesetzt werden.

Erfindungsgemäß ist ein Computerprogramm vorgesehen, das Befehle umfasst, die bewirken, dass die Steuereinheit die Verfahrensschritte nach einem oder mehreren der vorhergehenden Aspekte ausführt.

Erfindungsgemäß kann ein computerlesbares Medium vorgesehen sein, auf dem das vorstehend genannte Computerprogramm gespeichert ist.

### Kurze Beschreibung der Zeichnungen

Bevorzugte Ausführungsbeispiele der Erfindung werden im Folgenden anhand schematischer Zeichnungen näher erläutert. Es zeigen:
Figur 1 in einer perspektivischen Darstellung einen Montagearbeitsplatz gemäß einem Ausführungsbeispiel,
Figur 2 bis 7 jeweils ein Tiefenbild zur Erläuterung des Verfahrens gemäß einem Ausführungsbeispiel und
Figur 8 bis Figur 11 jeweils ein Tiefenbild zur Erläuterung eines Verfahrens gemäß einem weiteren Ausführungsbeispiel.

### Detaillierte Beschreibung der bevorzugten Ausführungsformen

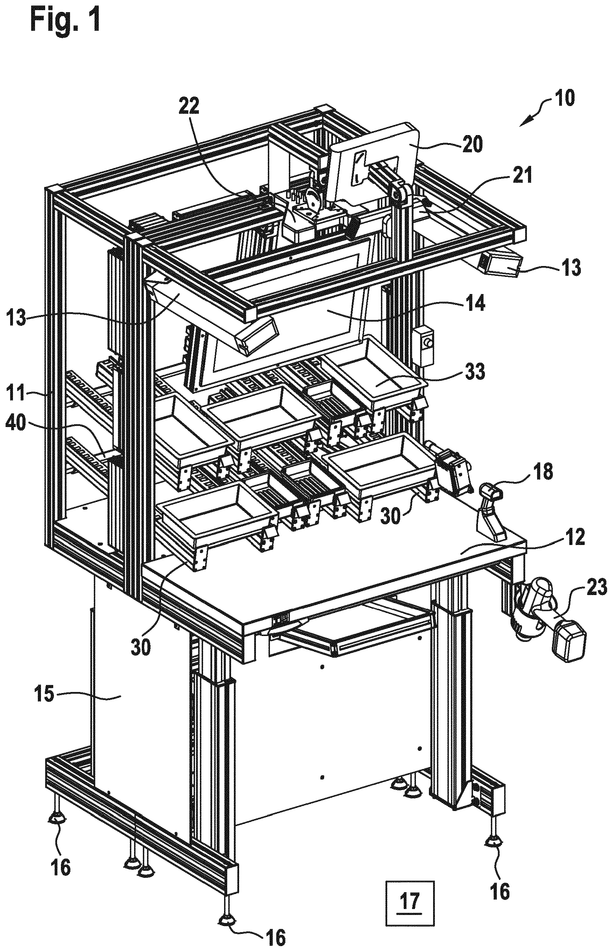

Fig. 1 zeigt eine perspektivische Darstellung eines erfindungsgemäßen Montagearbeitsplatzes 10. Auf diesem sollen im Rahmen einer Serienfertigung Baugruppen aus Einzelteilen zusammengebaut werden, und zwar von einem Werker per Hand. Der Montagearbeitsplatz 10 ist aufgrund seiner einfachen Umrüstbarkeit aber auch für die Einzelanfertigung von Baugruppen verwendbar. Die Einzelteile werden in Materialbehältern 33 bereitgestellt, welche in Behälteraufnahmevorrichtungen 30 aufgenommen sind. Diese sind auf Halteprofilen 40 derart befestigt, dass ihre Position und/oder ihre Breite einstellbar sind, so dass eine in ergonomischer Hinsicht optimale Anordnung der Materialbehälter 33 gewählt werden kann. Die Halteprofile 40 sind wiederum an einem Gestell 11 befestigt, welches vorliegend aus Aluminium-Strangpressprofilen zusammengesetzt ist. An dem Gestell 11 ist außerdem eine Arbeitsfläche 12 angeordnet, die vorliegend von einer ebenen Platte mit konstanter Dicke gebildet wird. Auf der Arbeitsfläche 12 wird die o.g. Baugruppe zusammengesetzt. Auf der Arbeitsfläche 12 können Hilfsvorrichtungen angeordnet sein, in welcher die Baugruppe aufgenommen ist. Die Höhenlage der Arbeitsfläche 12 ist verstellbar. Das Gestell 12 ist mit mehreren höhenverstellbaren Stellfü-ßen 16 versehen, so dass es auf einem vorzugsweise horizontalen Untergrund aufgestellt werden kann.

Oberhalb der Arbeitsfläche 12 ist ein Bildschirm 14 angeordnet, welcher an eine Steuervorrichtung 17 angeschlossen ist. Bei der (grobschematisch dargestellten) Steuervorrichtung 17 kann es sich um eine einzige Vorrichtung oder mehrere miteinander vernetzte Teilvorrichtungen handeln. Auf dem Bildschirm 14 werden beispielsweise die Arbeitsschritte angezeigt, welche der Werker ausführen soll. Weiter ist oberhalb der Arbeitsfläche 12 eine Bildprojektionsvorrichtung 20 angeordnet, welche vorzugsweise digital ansteuerbar ist, wobei sie beispielsweise nach dem LCD-, nach dem DLP- oder nach dem Laser-Prinzip arbeitet. Als Lichtquelle kommen vorzugsweise stromsparende und langlebige LED's zum Einsatz. Die Bildprojektionsvorrichtung 20 ist ebenfalls an die Steuervorrichtung 17 angeschlossen. Mit der Bildprojektionsvorrichtung 20 wird auf die Materialbehälter 33, aus denen im Rahmen des anstehenden Montagschritts ein Einzelteil zu entnehmen ist, ein Bild projiziert. Die Behälteraufnahmevorrichtungen 30 sind hierfür jeweils mit einer Projektionsfläche versehen. Das genannte Bild kann eine Zahl enthalten, welche die Anzahl der zu entnehmenden Teile angibt. Es kann beispielsweise einen grünen Hintergrund aufweisen, der dem Werker signalisiert, dass in diesen Materialbehälter 33 zu greifen ist. Der farbliche Hintergrund kann pulsierend zwischen "voller Intensität" und "aus" ausgeführt sein, sodass die Aufmerksamkeit des Werkers verstärkt auf die richtige Position gelenkt wird. Auf die Projektionsflächen der Materialbehälter 33 aus denen kein Teil zu entnehmen ist, kann beispielsweise ein Bild mit einem roten Hintergrund projiziert werden. Je nach Anzahl und Anordnungen der Behälteraufnahmevorrichtungen 30 sind mehrere Bildprojektionsvorrichtungen 20 erforderlich, um alle Projektionsflächen auszuleuchten.

Das Gestell 11 ist mit Leuchten 13 versehen, mit welchen die Arbeitsfläche 12 hell ausgeleuchtet werden kann, so dass der Werker ermüdungsfrei arbeiten kann. Die Bildprojektionsvorrichtung 20 kann in diesem Zusammenhang auch dazu genutzt werden, einzelne Bereiche des Arbeitsplatzes heller auszuleuchten, beispielsweise den Bereich in dem die zu montierende Baugruppe angeordnet ist. Weiter kann die Bildprojektionsvorrichtung 20 dazu genutzt werden, die Stelle der zu montierenden Baugruppe anzuleuchten, an der das nächste Einzelteil eingebaut werden soll. Es ist auch denkbar, dass die Bildprojektionsvorrichtung 20 die Leuchten 13 vollständig ersetzt.

Die Bildprojektionsvorrichtung 20 hat in ihrem Inneren typischerweise eine einzige Bildvorlage, welche projiziert wird und welche beispielsweise von eine DLP- oder einem LCD-Chip gebildet wird. Diese eine Bildvorlage enthält in ggf. verzerrter Form alle Bilder, welche auf die Projektionsflächen projiziert werden sollen. Zur Berechnung der Bildvorlage ist es notwendig, die Anordnung der Projektionsflächen im Raum zu kennen.

Die Behälteraufnahmevorrichtungen 30 jeweils mit einem ersten Datenträger versehen, wobei die Materialbehälter jeweils mit einem zweiten Datenträger versehen sind. Bei dem ersten und/oder dem zweiten Datenträger kann es sich beispielsweise um einen Barcode, um einen QR-Code, um ein RFID-Tag oder um ein NFC-Tag handeln. Der Montagearbeitsplatz 10 umfasst zumindest eine Lesevorrichtungen 18 mit welcher die ersten und die zweiten Datenträger auslesbar sind. Die Lesevorrichtung 18 ist drahtgebunden oder drahtlos an die Steuervorrichtung 17 anschließbar bzw. angeschlossen. Der erste Datenträger enthält im einfachsten Fall eine eindeutige erste Kennnummer für die jeweils zugeordnete Behälteraufnahmevorrichtung 30. Der zweite Datenträger enthält im einfachsten Fall eine eindeutige zweite Kennnummer des in dem zugeordneten Materialbehälter aufgenommenen Teiletyps. Vorzugsweise ist in einem Materialbehälter 33 nur ein einziger Typ von Einzelteilen aufgenommen. Weiter enthält der zweite Datenträger im genannten einfachsten Fall eine eindeutige zweite Kennnummer des Bautyps des zugeordneten Materialbehälters 33. Hierbei ist anzumerken, dass für unterschiedliche große Einzelteile typischerweise unterschiedlich große Materialbehälter 33 verwendet werden, wobei innerhalb einer Fabrik nur eine begrenzte Anzahl an Typen von Materialbehältern 33 Verwendung finden. Die Behälteraufnahmevorrichtungen 30 sind vorzugsweise verstellbar ausbildet, so dass sie an unterschiedliche Typen, insbesondere an unterschiedliche Baugrößen, von Materialbehältern 33 anpassbar sind. Eine entsprechende Verstellung hat Einfluss auf den Ort der Projektionsfläche und auf den Ort an dem der Werker typischerweise in den Materialbehälter 33 greift.

Oberhalb der Arbeitsfläche 12 ist eine erste und gewünschtenfalls eine zweite Positionserkennungsvorrichtung 21, 22 angeordnet. Mit diesen soll einerseits die räumliche Lage einer oder beider Hände des Werkers erfasst werden. Im einfachsten Fall wird jeweils nur der Ort eines Bezugspunkts der jeweiligen Hand erfasst. Es ist aber auch denkbar, die Drehlage der betreffenden Hand zu erfassen. Weiter soll mit der zweiten Positionserkennungsvorrichtung 22 die Position eines Werkzeuges 23, insbesondere eines elektrisch angetriebenen Handschraubers, ermittelt werden.

Anzumerken ist, dass vorzugsweise alle Behälteraufnahmevorrichtungen 30 parallel zu einer vertikalen Bezugsebene 15 ausgerichtet sind. Denkbar ist auch, dass die Behälteraufnahmevorrichtungen 30 beziehungsweise Schienen, insbesondere leicht, schräg angeordnet sind, so dass sie sich in Richtung hin zur Vorderkante der Arbeitsfläche 12 gesehen der Arbeitsfläche 12 annähern. Hierdurch kann/können ein Materialbehälter 33 oder Materialbehälter 33 nachrutschen, sobald der vordere Materialbehälter 33 oder ein jeweilige vorderer Materialbehälter 33 entnommen wurde. Durch die genannte Ausrichtung der Behälteraufnahmevorrichtungen 30 ergeben sich für den Werker ergonomisch günstige Greifbewegungen, wenn er in einen Materialbehälter greift.

Die Bezugsebene 15 ist insbesondere parallel zur Richtung der Schwerkraft ausgerichtet. Typischerweise fällt sie wie in Fig. 1 dargestellt mit einer Seitenwand des Gestells 11 zusammen.

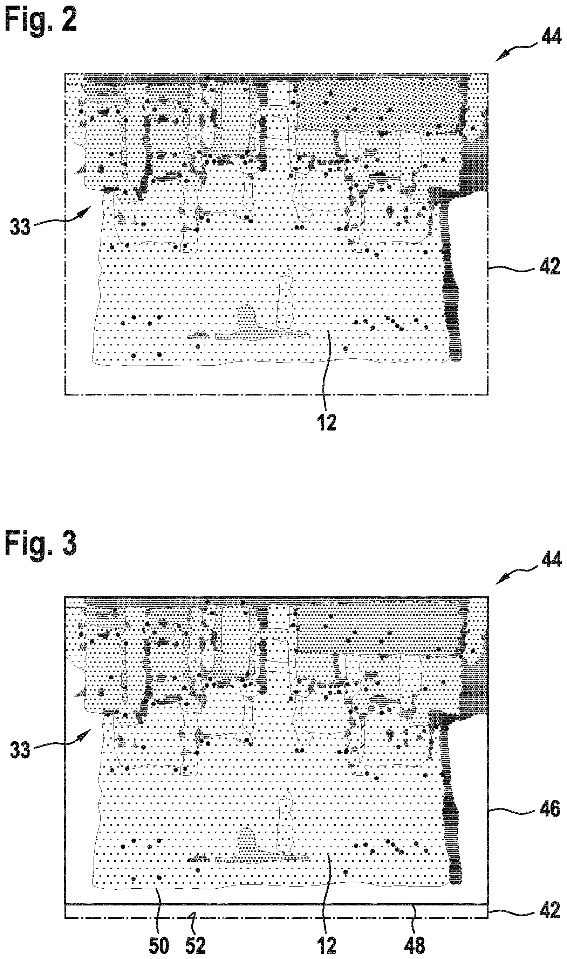

Gemäß Fig. 2 ist ein Tiefenbild gezeigt, das von einer Tiefenbildkamera der ersten Positionsbestimmungsvorrichtung 21, siehe Fig. 1 aufgenommen ist. Hierbei ist die Arbeitsfläche 12 erkennbar. Des Weiteren sind Materialbehälter 33 gezeigt, die allerdings nicht mit der Anordnung und Anzahl aus Fig. 1 übereinstimmt, da es sich um ein beispielhaftes Tiefenbild handelt. Je dunkler die Strukturen gemäß Fig. 2 sind, desto näher sind sie am Tiefenbildsensor angeordnet. Des Weiteren ist gemäß Fig. 2 ein Erfassungsbereich 42 der Tiefenbildkamera erkennbar, der ausreichend ist, um die gesamte Arbeitsfläche 12 und die gesamten Materialbehälter 33 zu erfassen. Das in Fig. 2 gezeigte Tiefenbilder wird als Bezugs-Tiefenbild 44 von der Steuereinheit 17, siehe Fig. 1, verwendet.

Gemäß Fig. 3 ist ein Bezugsrahmen 46 erkennbar. Dieser hat vier Seiten, wobei drei mit dem Erfassungsbereich 42 zusammenfallen und eine Seite als Bezugslinie 48 eingesetzt ist. Diese ist zum einen beabstandet zur Vorderkante 50 der Arbeitsfläche 12 und zum anderen beabstandet zur unteren Bildkante 52 des Erfassungsbereichs 42. Die Bezugslinie 48 ist somit zwischen der unteren Bildkante 52 und der Vorderkante 50 vorgesehen. Sie ist breiter als die Vorderkante 50 ausgebildet, wobei eine Breite entsprechend dem Erfassungsbereich 42 ausgebildet ist. Im Übrigen ist Fig. 3 identisch zu Fig. 2.

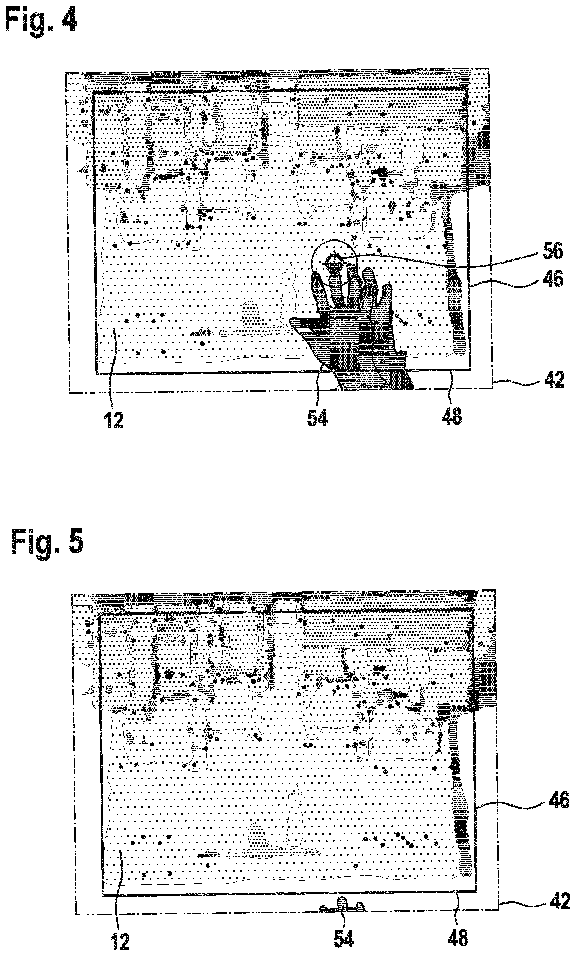

Fig. 4 unterscheidet sich von der Fig. 3 dadurch, dass sich ein Arm 54 von außen in den Erfassungsbereich 42 erstreckt und oberhalb der Arbeitsfläche 12 vorgesehen ist. Die Steuereinheit 17, die ständig Ist-Tiefenbilder erfasst, erkennt dann, dass es sich bei der nun zusätzlich vorgesehenen Struktur um den Arm 54 handelt, da folgende Kriterien erfüllt sind: die Struktur bzw. der Arm 54 weist eine Verbindung zur Bezugslinie 48 auf, da der Arm 54 diese schneidet. Auf einer jeweiligen Seite des Arms 54 ist des Weiteren jeweils ein Teil der Bezugslinie 48 vorhanden. Außerdem weist eine Fläche des Arms 54 ausgehend von der Bezugslinie 48 ins Bildinnere gesehen eine vorbestimmte Mindestgröße auf. Somit wird die Struktur von der Steuereinheit 17 als Arm 54 angesehen. Im weiteren Verlauf wird dann ein Bezugspunkt 56 vom Arm 54 ermittelt. Hierbei handelt es sich um denjenigen Bereich des Arms 54, der den größten Abstand zur Bezugslinie 48 in Richtung zum Bildinneren gesehen aufweist. Dieser Bezugspunkt wird dann für die Hand-Verfolgung genutzt.

Des Weiteren ist gemäß Fig. 4 der Bezugsrahmen 46 beispielhaft verkleinert dargestellt, womit sich dieser vollständig innerhalb des Erfassungsbereichs 42 befindet. Gemäß Fig. 4 ist der Arm 54 dunkler als die Arbeitsfläche 12 und somit ausreichend hoch über der Arbeitsfläche 12 angeordnet.

Fig. 5 zeigt im Unterschied zur Fig. 4 den Arm 54 außerhalb des Bezugsrahmens 46 bzw. nicht im Bereich, der sich ausgehend von der Bezugslinie 48 ins Bildinnere erstreckt. Der Arm 54 ist somit in einem Bereich innerhalb des Erfassungsbereichs 42 vorgesehen, der sich ausgehend von der Bezugslinie 48 nach außen erstreckt. Die Hand 54 wird somit von der Tiefenbildkamera erfasst, allerdings nicht als Arm oder Hand erkannt, da sie nicht mit der Bezugslinie 48 verbunden ist.

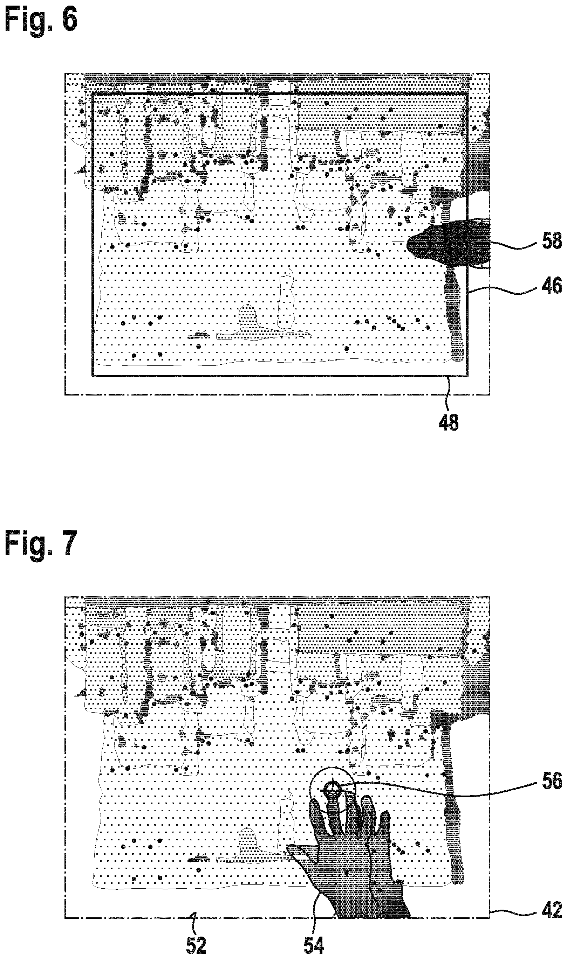

Gemäß Fig. 6 ist ein Arm 58 oder eine Struktur gezeigt, die seitlich über den Bezugsrahmen 46 ins Bildinnere eingreift. Der Arm 54 wird zwar von der Tiefenbildkamera erfasst, allerdings nicht als Arm 58 erkannt, da er beabstandet zur Bezugslinie 48 ist und nicht mit dieser in Verbindung steht.

Gemäß Fig. 7 ist eine Ausführungsform gezeigt, bei der als Bezugslinie die untere Bildkante 52 des Erfassungsbereichs 42 verwendet wird. Greift der Arm 54 von der unteren Bildkante 52 aus in den Erfassungsbereich 42 ein, so wird dieser von Steuereinheit 17 als Arm 54 erkannt, da er mit der unteren Bildkante 52 verbunden ist, eine Mindestfläche aufweist und die untere Bildkante 52 auf beiden Seiten des Arms 54 ersichtlich ist. Als Bezugspunkt 56 wird derjenige Bereich des Arms 54 angesehen, der den größeren Abstand zur unteren Bildkante 52 aufweist. Der Abstand wird vorzugsweise senkrecht zur Bezugslinie gemessen, die höchst vorzugsweise gerade ausgebildet ist.

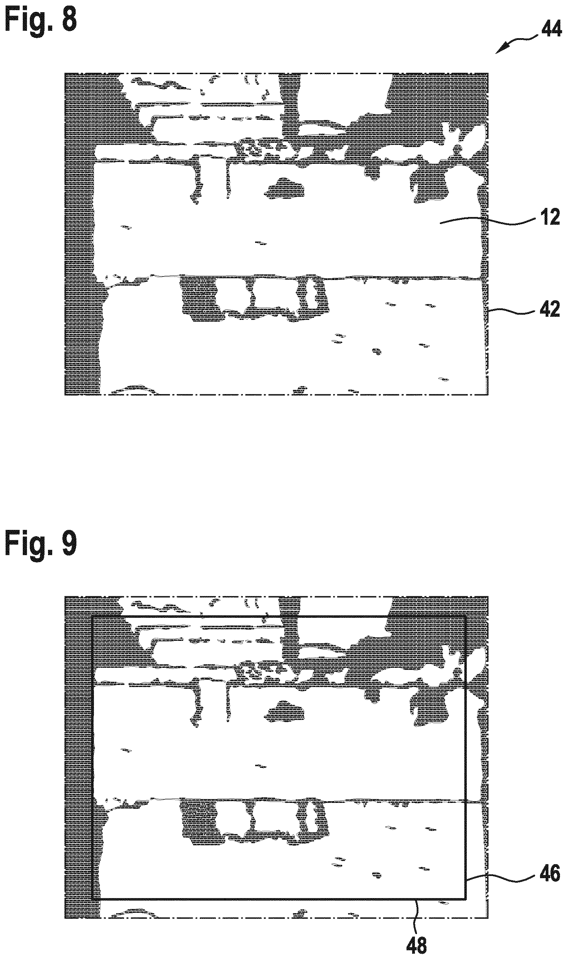

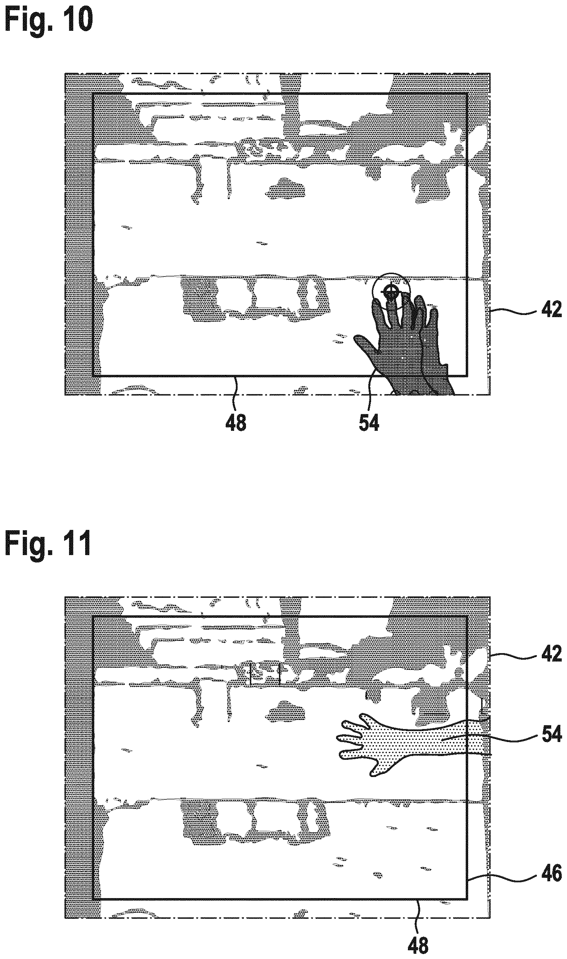

Gemäß den Fig. 8 bis 11 ist eine weitere Ausführungsform gezeigt, mit der ein anderer Arbeitsplatz mit einer anderen Arbeitsfläche 12, im Unterschied zur vorhergehend erläuterten Ausführungsform gezeigt ist. Fig. 8 stellt dabei den Erfassungsbereich 42 der Tiefenbildkamera dar, der als Bezugstiefenbild 44 eingesetzt ist. In Fig. 9 ist dann der Bezugsrahmen 46 mit der Bezugslinie 48 gezeigt. Fig. 10 zeigt den Arm 54, der über die Bezugslinie 48 in den Erfassungsbereich 42 eingreift. Gemäß Fig. 11 greift der Arm 48 seitlich über den Bezugsrahmen 46 in den Erfassungsbereich 42 ein, wobei er nicht als Arm 54 von der Steuereinheit erfasst wird, da er von der Bezugslinie 48 beabstandet ist.

Offenbart ist ein Verfahren zur Handverfolgung bei einem Montagearbeitsplatz. Eine Arbeitsfläche wird hierbei von einer Tiefenkamera in einem Erfassungsbereich der Tiefenkamera erfasst. Die Tiefenkamera zeichnet hierbei Tiefenbilder auf. Eine Steuereinheit nimmt hierbei über die Tiefenkamera ein Tiefenbild auf, das als Bezugs-Tiefenbild vorgesehen ist und körperteilefrei ist. Im Erfassungsbereich ist des Weiteren eine Bezugslinie festgelegt. Die von der Tiefenkamera aufgezeichneten Tiefenbilder werden mit dem Bezugs-Tiefenbild verglichen und falls es zu Abweichungen kommt wird eine Struktur extrahiert. Es wird dann von der Steuereinheit untersucht, ob es sich bei der Struktur um einen Arm handelt. Dies ist dann der Fall, wenn die Struktur die Bezugslinie berührt und/oder eine Mindestgröße hat.

### Bezugszeichenliste

- 10: Montagearbeitsplatz
- 11: Gestell
- 12: Arbeitsfläche
- 13: Leuchte
- 14: Bildschirm
- 15: vertikale Bezugsebene
- 16: Stellfuß
- 17: Steuervorrichtung
- 18: Lesevorrichtung
- 19: Position des Werkers
- 20: Bildprojektionsvorrichtung
- 21: erste Positionsbestimmungsvorrichtung
- 22: zweite Positionsbestimmungsvorrichtung
- 23: Werkzeug (Schrauber)
- 30: Behälteraufnahmevorrichtung
- 31: erster Datenträger
- 32: zweiter Datenträger
- 33: Materialbehälter
- 34: Referenzpunkt
- 40: Halteprofil
- 42: Erfassungsbereich
- 44: Bezugs-Tiefenbild
- 46: Bezugsrahmen
- 48: Bezugslinie
- 50: Vorderkante
- 52: untere Bildkante
- 54: Arm
- 56: Bezugspunkt

## Patentansprüche

1. Verfahren zur Hand-Verfolgung bei einem manuellen Montagearbeitsplatz (10), der eine Arbeitsfläche (12) und eine Tiefenkamera (21) hat, die mit einer Steuereinheit (17) verbunden ist, wobei die Steuereinheit (17) über die Tiefenkamera (21) in einem Erfassungsbereich (42) Ist-Tiefenbilder erfasst, wobei die Arbeitsfläche (12) zumindest teilweise im Erfassungsbereich (42) liegt, wobei die Steuereinheit (17) über die Tiefenkamera (21) ein Bezugs-Tiefenbild (44) des Erfassungsbereichs (42) erfasst, und wobei die Steuereinheit (17) zumindest eine Bezugslinie (48) im Erfassungsbereich (42) vorsieht, wobei eine in den Erfassungsbereich (42) eingebrachte Struktur (54) von der Steuereinheit (17) erfasst wird, indem die Ist-Tiefenbilder mit dem Bezugs-Tiefenbild (44) von der Steuereinheit (17) verglichen werden, und wobei die Steuereinheit (17) die Struktur (54) als zumindest einen Arm (54) erfasst, wenn die Struktur (54) in einem erfassten Ist-Tiefenbild gesehen eine Verbindung zur Bezugslinie (48) aufweist, indem die Struktur (54) die Bezugslinie (48) berührt, schneidet oder überdeckt, und/oder wenn die Struktur (54) in einem erfassten Ist-Tiefenbild gesehen eine vorbestimmte Mindestfläche hat.

2. Verfahren nach Anspruch 1, wobei der Punkt des Arms (54), der am weitesten von der Bezugslinie (48) in Richtung senkrecht zur Bezugslinie (48) hin in Richtung Bildinneres gesehen entfernt ist, als Bezugspunkt (56) für die Hand-Verfolgung vorgesehen ist.

3. Verfahren nach Anspruch 1 oder 2, wobei als Bezugslinie eine Bildkante (52) des von der Tiefenkamera (21) erfassten Ist-Tiefenbilds vorgesehen ist, oder wobei die Bezugslinie (48) innerhalb des Erfassungsbereichs (42) liegt.

4. Verfahren nach einem der vorhergehenden Ansprüche, wobei die Arbeitsfläche (12) eine Vorderkante (50) hat, vor der sich zumindest eine Montageperson des Montagearbeitsplatzes bei der Montage aufhält, und wobei die Bezugslinie (48; 52) sich etwa im Parallelabstand zu dieser erstreckt.

5. Verfahren nach Anspruch 4, wobei die Bezugslinie (48; 52) einen vorbestimmten Abstand zur Vorderkante (50) hat.

6. Verfahren nach einem der vorhergehenden Ansprüche, wobei die Bezugslinie (48; 52) eine vorbestimmte Länge hat.

7. Verfahren nach einem der Ansprüche 4 bis 6, wobei die Bezugslinie (48; 52) die Vorderkante in beiden Längsrichtungen der Vorderkante (50) gesehen überstreckt.

8. Verfahren nach einem der Ansprüche 4 bis 7, wobei die Bezugslinie (48; 52) benachbart zur Vorderkante (50) angeordnet ist.

9. Verfahren nach einem der vorhergehenden Ansprüche, wobei die Steuereinheit (17) die Struktur als zumindest einen Arm (54) erfasst, wenn die Struktur die Verbindung zur Bezugslinie (48; 52) hat und die Bezugslinie (48; 52) auf beiden Seiten der Struktur oder auf einer Seite der Struktur ersichtlich ist.

10. Verfahren nach einem der vorhergehenden Ansprüche, wobei die Steuereinheit (17) einen Abstand der Struktur (54) von der Arbeitsfläche (12) über die Tiefenbilder erfasst.

11. Verfahren nach einem der vorhergehenden Ansprüche, wobei die Steuereinheit (17) die Struktur als zumindest einen Arm (54) erfasst, wenn die Struktur einen vorbestimmten Abstand zur Arbeitsfläche (12) hat.

12. Montagearbeitsplatz mit einer Arbeitsfläche (12), einer Tiefenkamera (21), die oberhalb der Arbeitsfläche (12) angeordnet ist, und einer Steuereinheit (17), wobei der Montagearbeitsplatz derart eingerichtet ist, dass das Verfahren gemäß einem der vorhergehenden Ansprüche ausgeführt wird.

13. Vorrichtung, die als Modul bei einem Montagearbeitsplatz einsetzbar ist, mit einer Tiefenkamera (21) und einer Steuereinheit (17), wobei die Vorrichtung eingerichtet ist, das Verfahren gemäß einem der Ansprüche 1 bis 11 auszuführen. 15. April 2019

14. Computerprogramm, umfassend Befehle, die bewirken, dass eine Steuereinheit (17) die Verfahrensschritte nach einem der Ansprüche 1 bis 11 ausführt.

15. Computerlesbares Medium, auf dem das Computerprogramm nach Anspruch 14 gespeichert ist.

## Claims

1. Method for hand tracking at a manual assembly workstation (10), which has a working surface (12) and a depth camera (21), which is connected to a control unit (17), wherein the control unit (17) detects actual depth images in a detection area (42) by means of the depth camera (21), wherein the working surface (12) is at least partially in the detection area (42), wherein the control unit (17) detects a reference depth image (44) of the detection area (42) by means of the depth camera (21), and wherein the control unit (17) provides at least one reference line (48) in the detection area (42), wherein a structure (54) that has been introduced into the detection area (42) is detected by the control unit (17) in that the actual depth images are compared with the reference depth image (44) by the control unit (17), and wherein the control unit (17) detects the structure (54) as at least one arm (54) if the structure (54) seen in a detected actual depth image has a connection with the reference line (48), in that the structure (54) touches, intersects or covers the reference line (48), and/or if the structure (54) seen in a detected actual depth image has a predetermined minimum surface area.

2. Method according to Claim 1, wherein the point of the arm (54) that is furthest away from the reference line (48), seen in a direction perpendicular to the reference line (48) in the direction of the interior of the image, is provided as a reference point (56) for the and hand tracking.

3. Method according to Claim 1 or 2, wherein an image edge (52) of the actual depth image detected by the depth camera (21) is provided as a reference line, or wherein the reference line (48) lies within the detection area (42) .

4. Method according to one of the preceding claims, wherein the working surface (12) has a front edge (50), in front which at least one assembly person of the assembly workstation is situated during assembly, and wherein the reference line (48; 52) extends approximately parallel and at a distance from said front edge.

5. Method according to Claim 4, wherein the reference line (48; 52) is at a predetermined distance from the front edge (50).

6. Method according to one of the preceding claims, wherein the reference line (48; 52) has a predetermined length.

7. Method according to one of Claims 4 to 6, wherein the reference line (48; 52) extends over the front edge, seen in both longitudinal directions of the front edge (50) .

8. Method according to one of Claims 4 to 7, wherein the reference line (48; 52) is arranged adjacent to the front edge (50).

9. Method according to one of the preceding claims, wherein the control unit (17) detects the structure as at least one arm (54) if the structure has the connection with the reference line (48; 52) and the reference line (48; 52) can be seen on both sides of the structure or on one side of the structure.

10. Method according to one of the preceding claims, wherein the control unit (17) detects a distance of the structure (54) from the working surface (12) by means of the depth images.

11. Method according to one of the preceding claims, wherein the control unit (17) detects the structure as at least one arm (54) if the structure is at a predetermined distance from the working surface (12).

12. Assembly workstation with a working surface (12), a depth camera (21), which is arranged above the working surface (12), and a control unit (17), wherein the assembly workstation is set up in such a way that the method according to one of the preceding claims is performed.

13. Device, which can be used as a module in an assembly workstation, with a depth camera (21) and a control unit (17), wherein the device is set up to perform the method according to one of Claims 1 to 11.

14. Computer program, comprising commands which cause a control unit (17) to perform the method steps according to one of Claims 1 to 11.

15. Computer-readable medium on which the computer program according to Claim 14 is stored.

## Revendications

1. Procédé de suivi des mains sur un poste de travail de montage manuel (10) qui dispose d'un plan de travail (12) et d'une caméra de temps de vol (21) qui est reliée à une unité de commande (17), l'unité de commande (17) détectant par l'intermédiaire de la caméra de temps de vol (21) des images de temps de vol réelles dans une zone de détection (42), le plan de travail (12) se trouvant au moins partiellement dans la zone de détection (42), l'unité de commande (17) détectant par l'intermédiaire de la caméra de temps de vol (21) une image de temps de vol de référence (44) de la zone de détection (42), et l'unité de commande (17) prévoyant au moins une ligne de référence (48) dans la zone de détection (42), une structure (54) introduite dans la zone de détection (42) étant détectée par l'unité de commande (17) en ce que les images de temps de vol réelles sont comparées avec l'image de temps de vol de référence (44) de l'unité de commande (17), et l'unité de commande (17) détectant la structure (54) sous la forme d'au moins un bras (54) si la structure (54), vue sur une image de temps de vol réelle détectée, présente un lien avec la ligne de référence (48), en ce que la structure (54) touche, coupe ou recouvre la ligne de référence (48), et/ou si la structure (54), vue sur une image de temps de vol réelle détectée, présente une superficie minimale prédéterminée.

2. Procédé selon la revendication 1, dans lequel le point du bras (54) qui est le plus éloigné de la ligne de référence (48) dans la direction perpendiculaire à la ligne de référence (48), vu en direction de l'intérieur de l'image, est prévu comme point de référence (56) pour le suivi de la main.

3. Procédé selon la revendication 1 ou 2, dans lequel un bord d'image (52) de l'image de temps de vol réelle détectée par la caméra de temps de vol (21) est prévu comme ligne de référence, ou dans lequel la ligne de référence (48) se trouve à l'intérieur de la zone de détection (42).

4. Procédé selon l'une quelconque des revendications précédentes, dans lequel le plan de travail (12) présente un bord avant (50) devant lequel se tient au moins un monteur du poste de travail de montage lors du montage, et la ligne de référence (48 ; 52) s'étendant approximativement à distance parallèle par rapport à celui-ci.

5. Procédé selon la revendication 4, dans lequel la ligne de référence (48 ; 52) présente une distance prédéterminée par rapport au bord avant (50).

6. Procédé selon l'une quelconque des revendications précédentes, dans lequel la ligne de référence (48 ; 52) présente une longueur prédéterminée.

7. Procédé selon l'une quelconque des revendications 4 à 6, dans lequel la ligne de référence (48 ; 52) dépasse du bord avant, vue dans les deux directions longitudinales du bord avant (50).

8. Procédé selon l'une quelconque des revendications 4 à 7, dans lequel la ligne de référence (48 ; 52) est disposée de manière adjacente au bord avant (50).

9. Procédé selon l'une quelconque des revendications précédentes, dans lequel l'unité de commande (17) détecte la structure sous la forme d'au moins un bras (54) si la structure présente le lien avec la ligne de référence (48 ; 52) et la ligne de référence (48 ; 52) est visible des deux côtés de la structure ou d'un côté de la structure.

10. Procédé selon l'une quelconque des revendications précédentes, dans lequel l'unité de commande (17) détecte une distance de la structure (54) par rapport au plan de travail (12) à l'aide des images de temps de vol.

11. Procédé selon l'une quelconque des revendications précédentes, dans lequel l'unité de commande (17) détecte la structure sous la forme d'au moins un bras (54) si la structure présente une distance prédéterminée par rapport au plan de travail (12).

12. Poste de travail de montage, comprenant un plan de travail (12), une caméra de temps de vol (21) qui est disposée au-dessus du plan de travail (12), et une unité de commande (17), le poste de travail de montage étant aménagé de telle sorte que le procédé selon l'une quelconque des revendications précédentes est exécuté.

13. Dispositif pouvant être mis en œuvre sous forme de module sur un poste de travail de montage, comprenant une caméra de temps de vol (21) et une unité de commande (17), le dispositif étant aménagé pour exécuter le procédé selon l'une quelconque des revendications précédentes 1 à 11.

14. Programme informatique, comprenant des ordres qui font qu'une unité de commande (17) exécute les étapes de procédé selon l'une quelconque des revendications 1 à 11.

15. Support lisible par ordinateur sur lequel est stocké le programme informatique selon la revendication 14.
